# EUROPEAN PATENT SPECIFICATION

(11) **EP 1 864 897 B1**
(45) Date of publication and mention of the grant of the patent: **30.09.2009**
(21) Application number: 07252316.0
(22) Date of filing: 08.06.2007
(51) Int. Cl.: B62K 11/10, B62J 99/00

(54) **Motorcycle**
Motorrad
Motocyclette

(30) Priority: 09.06.2006 JP 2006160441
(43) Date of publication of application: 12.12.2007
(73) Proprietor: Yamaha Hatsudoki Kabushiki Kaisha, Iwata-shi, Shizuoka 438-8501 (JP)
(72) Inventor: Yamamoto, Yoshiaki, Iwata-shi Shizuoka-ken 438-8501 (JP)
(74) Representative: Lamb, Martin John Carstairs

(56) References cited:
- EP-A1- 1 514 784
- EP-A2- 1 296 036
- JP-A- 10 067 360
- US-A1- 2002 020 367

## Description

### FIELD OF THE INVENTION

The present invention relates to a motorcycle comprising a unit swing type engine unit supported on a body frame to be swingable vertically, a suspension, which connects between the unit swing type engine unit and the body frame, and an air cleaner, which supplies an air to the engine unit.

### BACKGROUND TO THE INVENTION

With some known scooter type motorcycles, a rear end of a unit swing type engine unit and a body frame are connected to each other by a vertically arranged rear suspension and an air cleaner is arranged forwardly of the rear suspension. Such a motorcycle arrangement is disclosed in, for example, JP 01-229170.

The conventional motorcycle described above adopts a construction in which the air cleaner is arranged forwardly of the rear suspension arranged at a rear end of the engine unit. Therefore, because of a fear of an interference with the rear suspension when the air cleaner is increased in volume, a problem arises that restrictions are imposed on an increase in volume.

The invention has been thought of in view of the conventional situation described above and has among its objects to provide a motorcycle capable of increasing the volume of an air cleaner without an interference with a rear suspension.

Each of prior art references EP 1514784, JP 10-67360 and US 2002/0020367 discloses a motorcycle which includes a rear wheel, and an air cleaner and a suspension unit positioned on opposing sides of the rear wheel. EP 1296036 discloses a motorcycle in which an air cleaner and a suspension unit are located on the same side of a rear wheel

### SUMMARY OF THE INVENTION

According to a first aspect of the present invention, there is provided a motorcycle comprising:
a body frame;
an engine unit, a front portion of which is pivotally mounted on the body frame and a rear portion of which supports a rear wheel;
an air cleaner adapted to supply air to the engine unit, wherein the air cleaner is arranged above the engine unit;
a suspension unit disposed between the engine unit and the body frame, wherein the suspension unit is arranged on one side of the rear wheel and the air cleaner is arranged on an opposing side of the rear wheel; and
a seat arranged above the suspension and wherein an upper edge of the suspension unit is substantially aligned in heightwise position with an upper edge of the air cleaner.

The unit swing type engine unit may comprise an engine body and a transmission case formed integrally with the engine body to include a belt chamber, and the rear wheel may be arranged at a rear end of the transmission case, with the air cleaner being arranged on and fixed to an upper surface of the transmission case.

The suspension may be arranged substantially horizontally in a longitudinal direction of a vehicle to include an overlapping portion, which partially overlaps the air cleaner as viewed from laterally of a vehicle.

The seat may include a main seat and a tandem seat arranged rearwardly of the main seat with an upper edge thereof positioned in a higher location than that of an upper edge of the main seat, and an article storage part may be provided between the tandem seat and the suspension.

With the motorcycle according to the invention, since the suspension is arranged on one side of the rear wheel in a vehicle width direction and the air cleaner is arranged above the unit swing type engine unit on the other side of the rear wheel, it is possible to arrange the air cleaner making effective use of an empty space disposed above the unit swing type engine unit without an interference with the suspension, thus enabling increasing the air cleaner in volume.

### BRIEF DESCRIPTION OF THE DRAWINGS

These and other aspects of the present invention will now be described, by way of example only, with reference to the accompanying drawings, in which:
Fig. 1 is a side view showing a motorcycle according to an embodiment of the invention;
Fig. 2 is a plan view showing a body frame of the motorcycle;

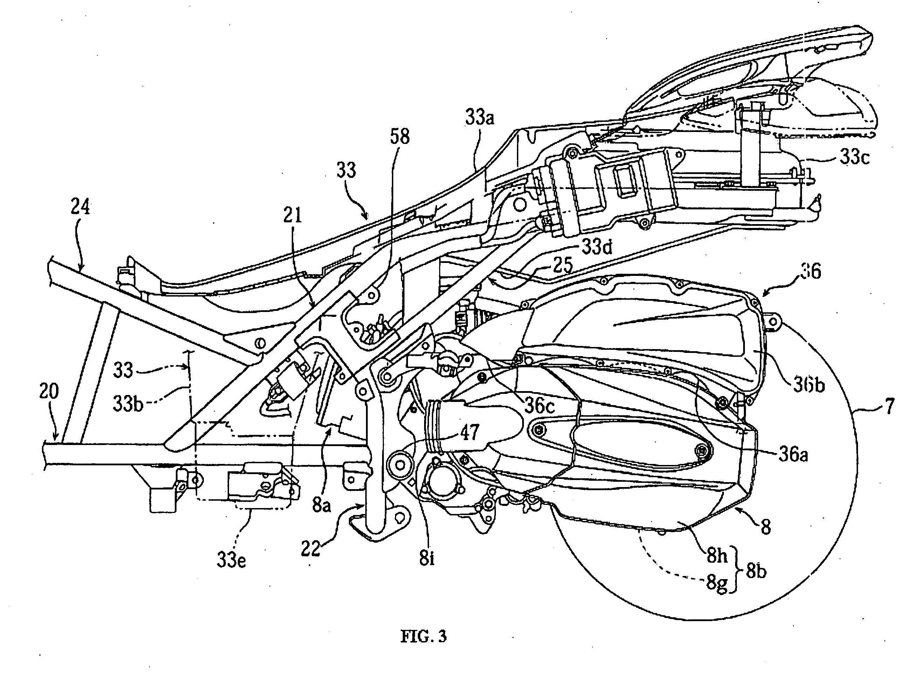

Fig. 3 is a side view showing a unit swing type engine unit mounted to the body frame;

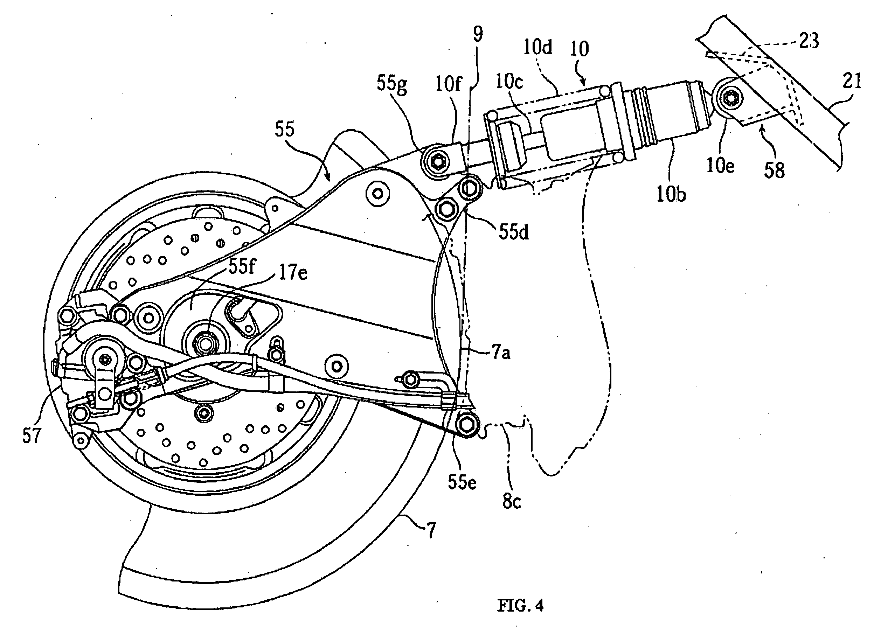

Fig. 4 is a side view showing a rear suspension connecting between the body frame and the engine unit;
Fig. 5 is a side view showing a cross section of a storage box arranged on the body frame;

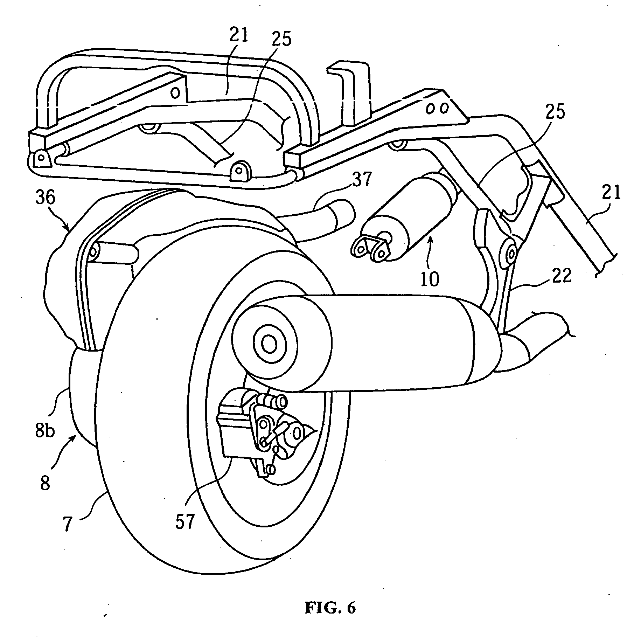

Fig. 6 is a rear view showing the positional relationship between an air cleaner and the suspension as viewed from the rear of a vehicle; and

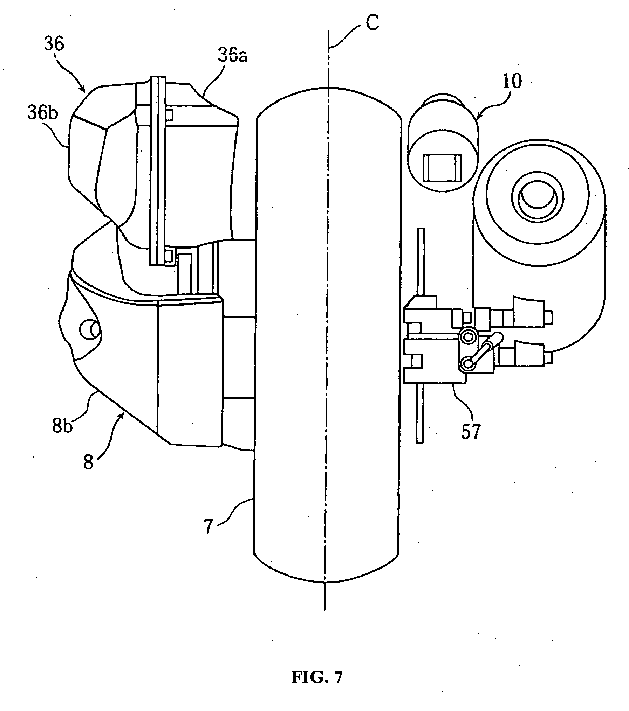

Fig. 7 is a perspective view showing the positional relationship between the air cleaner and the suspension.

### DETAILED DESCRIPTION OF THE DRAWINGS

It should be noted that front and rear, and left and right referred to in descriptions of the embodiment mean front and rear, and left and right as seen in a state of being seated on a seat of the motorcycle.

In the drawings, the reference numeral 1 denotes a starter type motorcycle. The motorcycle 1 comprises a body frame 2, a front fork 6 pivotally supported by a head pipe 3 positioned at a front end of the body frame 2 to be steerable left and right, the front fork 6 supporting a front wheel 4 at a lower end thereof and a steering handle 5 at an upper end thereof. A unit swing type engine unit 8 is supported at a front portion thereof on the body frame 2 to be swingable vertically, and a rear wheel 7 is located on a rear portion of the engine unit 8. A rear suspension 10 is provided between the engine unit 8 and the body frame 2. Furthermore, a straddle-type seat 9 is mounted on the body frame 2 above the engine unit 8.

The seat 9 includes a main seat 9a and a tandem seat 9b formed separately from the main seat 9a. The tandem seat 9b is arranged so that an upper edge 96' of the tandem seat 9b is arranged to be positioned in a higher location than that of an upper edge 9a' of the main seat 9a.

The front fork 6 has a front side thereof covered by a front cover 11 and a rear side thereof covered by a leg shield 12, and a lower periphery of the seat 9 is covered by a side cover 13.

The body frame 2 comprises the head pipe 3 having a predetermined rear inclination, a pair of left and right downtubes 20, 20 joined to a lower end of the head pipe 3, a pair of left and right seat rails 21, 21 connected to the left and right downtubes 20, 20, a pair of left and right engine suspension frames 22, 22 extending substantially vertically from rear end surfaces 20a of the left and right downtubes 20 to be connected to the left and right seat rails 21, and a cross member 23 extending in a vehicle width direction to connect between connections 21a of the engine suspension frames 22 of the left and right seat rails 21.

Further, the body frame 2 includes left and right upper tubes 24, 24 extending substantially straight and rearwardly, obliquely downward from the head pipe 3, and left and right seat stays 25, 25 connecting between the left and right engine suspension frames 22 and lower portions of the seat rails 21 below the tandem seat.

Also, longitudinally extending rectangular-shaped foot brackets 29, 29 are connected and bridged between the left and right downtubes 20 and the left and right seat rails 21.

A fuel tank 30 is arranged in a space surrounded by the left and right downtubes 20 and the left and right upper tubes 24, and a radiator 31 is arranged below the fuel tank 30.

Also, an upwardly opened storage box 33 is arranged behind the fuel tank 30 in a space which is surrounded by the left and right downtubes 20, the seat rails 21, and the engine suspension frames 22.

The storage box 33 extends substantially over the total length of the seat 9 in a longitudinal direction, and an opening 33a of the storage box 33 is positioned in a higher location than those of the upper tubes 24 and the seat rails 21 to be covered by the seat 9 to be able to open and close.

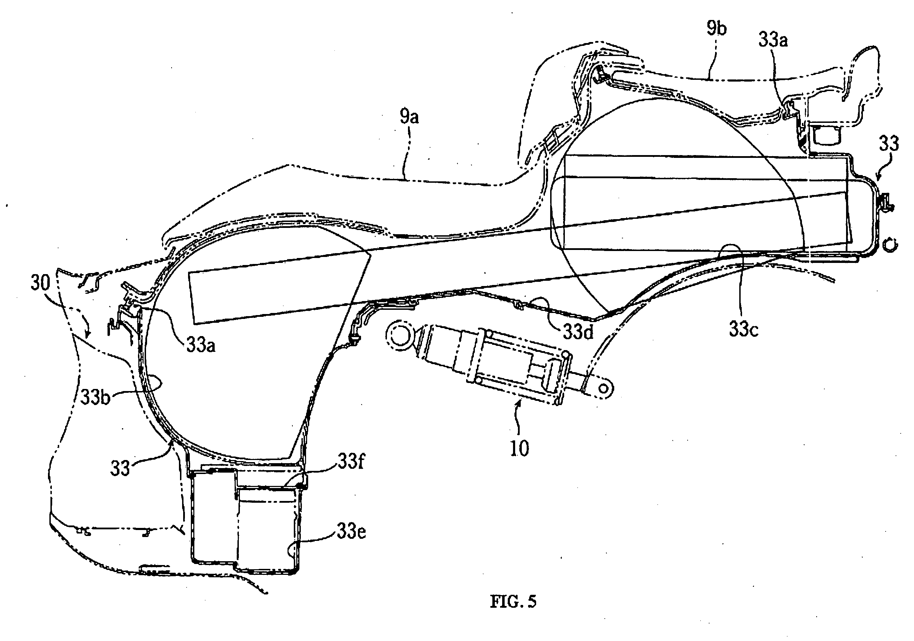

The storage box 33 includes a front storage part 33b positioned below the main seat 9a and sized to enable storing therein a helmet, a rear storage part 33c positioned below the tandem seat 9b and also sized to enable storing therein a helmet, and an intermediate storage part 33d positioned between the front and rear storage parts 33b, 33c to corporate with the front and rear storage parts 33b, 33c to enable storing a lengthy or elongate article (see Fig. 5).

A battery storage part 33e is formed on a bottom wall portion of the front storage part 33b to extend downward. The battery storage part 33e projects below the downtubes 20. A battery, a fuse box, etc. are stored in the battery storage part 33e and a tool storage part 33f is formed between the battery storage part 33e and the front storage part 33b.

The rear storage part 33c is provided between the tandem seat 9b, which is positioned in a higher location than that of the main seat 9a, and the rear suspension 10.

With the engine unit 8, an engine body 8a and a transmission case 8b including a belt chamber 8b', in which a V-belt continuously variable transmission 17 is accommodated, are joined integrally.

The engine body 8a is a water-cooled four-stroke single cylinder engine mounted with a cylinder axis A directed substantially horizontally and constructed such that a cylinder block 8d, a cylinder head 8e, and a head cover 8f are successively joined to a front mating surface of a crank case 8c, in which a crank shaft 18 arranged horizontally in the vehicle width direction is accommodated.

The transmission case 8b includes a case body 8g contiguous to a left end of the crank case 8c to extend rearward, and a case cover 8h mounted detachably to a left mating surface of the case body 8g. An intake port 8i is opened at a front end of the case cover 8h toward the front of a vehicle to introduce a cooling air into the transmission case 8b.

The V-belt continuously variable transmission 17 is constructed such that a drive pulley 17a arranged at a left end of the crank shaft 18 in the transmission case 8b, and a driven pulley 17b arranged at a rear end of the transmission case 8b are connected to each other by a V-belt 17c. A main shaft 17d, to which rotation of the driven pulley 17b is transmitted, and a drive shaft 17e are arranged in the transmission case 8b, and the rear wheel 7 is mounted to the drive shaft 17e.

The body frame 2 includes pivot members 47, 47 arranged in the vicinity of connections of the left and right engine suspension frames 22, 22 to the downtubes 20. The engine unit 8 is supported through a pivot shaft 51 by the left and right pivot members 47 to be able to swing vertically.

A rear arm 55, which may be die-cast, is arranged on an opposite side of the transmission case 8b of the engine unit 8 with the rear wheel 7 positioned on a body center line C therebetween.

The rear arm 55 is substantially triangular-shaped so that a vertical dimension thereof decreases toward the rear from the front, a front, upper end 55d and a front, lower end 55e of the rear arm 55, respectively, are bolted and fixed to the crank case 8c, and a rear end 55f supports the drive shaft 17e with a bearing (not shown) therebetween. Accordingly, the drive shaft 17e is supported at both ends thereof by the transmission case 8b and the rear arm 55. Also, a brake caliper 57 is mounted to a side of the rear end 55f of the rear arm 55 rearwardly of the drive shaft 17e. The rear suspension 10 is arranged between the rear arm 55 and the cross member 23 to be directed substantially horizontally in the longitudinal direction of a vehicle.

The rear suspension 10 is arranged above the engine unit 8 and is substantially parallel to the cylinder axis A of the engine unit 8.

The rear suspension 10 includes a cylinder 10b, a piston rod 10c connected to a piston (not shown) arranged slidably in the cylinder 10b, and a coil spring 10d arranged between the piston rod 10c and the cylinder 10b to bias the both 10b, 10c in a direction of elongation. An elastic bush 10e is connected to a front end of the cylinder 10b and a C-shaped mount bracket 10f is connected to a rear end of the piston rod 10c.

A boss portion 55g is formed above the front, upper end 55d of the rear arm 55. The bracket 10f of the rear suspension 10 is supported rotatably by the boss portion 55g. The boss portion 55g is arranged above a front edge 7a of the rear wheel 7 and, more specifically, arranged to be positioned near to and rearwardly of a vertical line a, which passes through the front edge 7a.

A connecting bracket 58 is joined to a right end of the cross member 23 in the vehicle width direction. The elastic bush 10e of the rear suspension 10 is supported rotatably by the connecting bracket 58.

An air cleaner 36 is arranged on and fixed to an upper wall surface of the transmission case 8b of the engine unit 8 to be able to swing vertically together with the transmission case 8b.

A longitudinal length of the air cleaner 36 is set to substantially extend over the total length of the transmission case 8b and a heightwise dimension thereof is set so that a little clearance is generated between it and the seat rails 21 when the engine unit 8 is at a maximum stroke.

The air cleaner 36 is fixed to the transmission case 8b and comprises a cleaner body 36a, which receives and contains therein a filter (not shown), and a cleaner cover 36b mounted detachably to a left mating surface of the cleaner body 36a.

A downwardly opened suction port 36c is formed on the cleaner cover 36b and a discharge port 36d is formed on a front wall of the cleaner body 36a. An intake pipe 37 is connected to the discharge port 36d, the intake pipe 37 being connected to a throttle body 38.

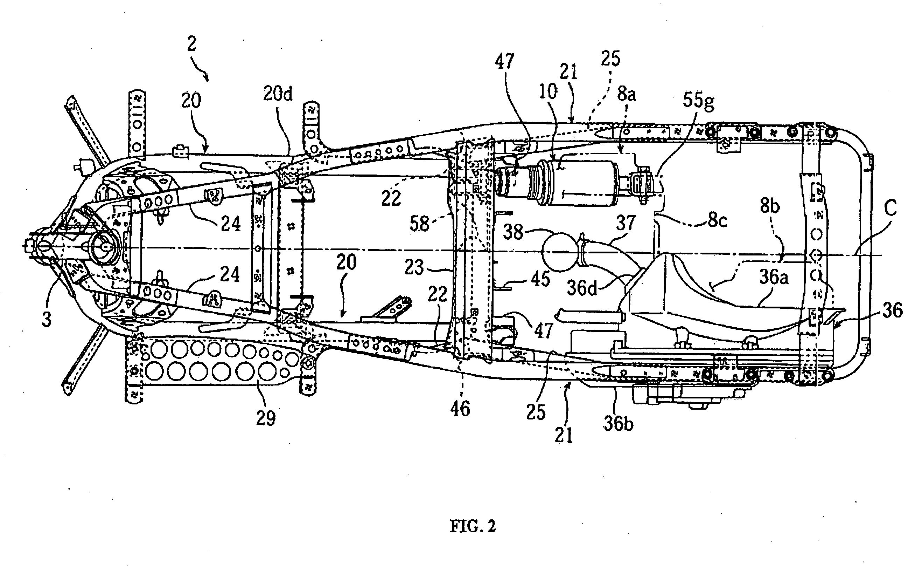

The rear wheel 7 is arranged on the body center line C as viewed in plan view (see Fig. 2). The rear suspension 10 is arranged rightwardly in the vehicle width direction (on one side of the rear wheel 7) of the body center line C, the air cleaner 36 is arranged leftwardly (on the other side of the rear wheel 7) of the body center line C, and the throttle body 38 is arranged on the body center line C. Also, the rear suspension 10 is positioned forwardly of the air cleaner 36 to be arranged in parallel to the throttle body 38 in the vehicle width direction.

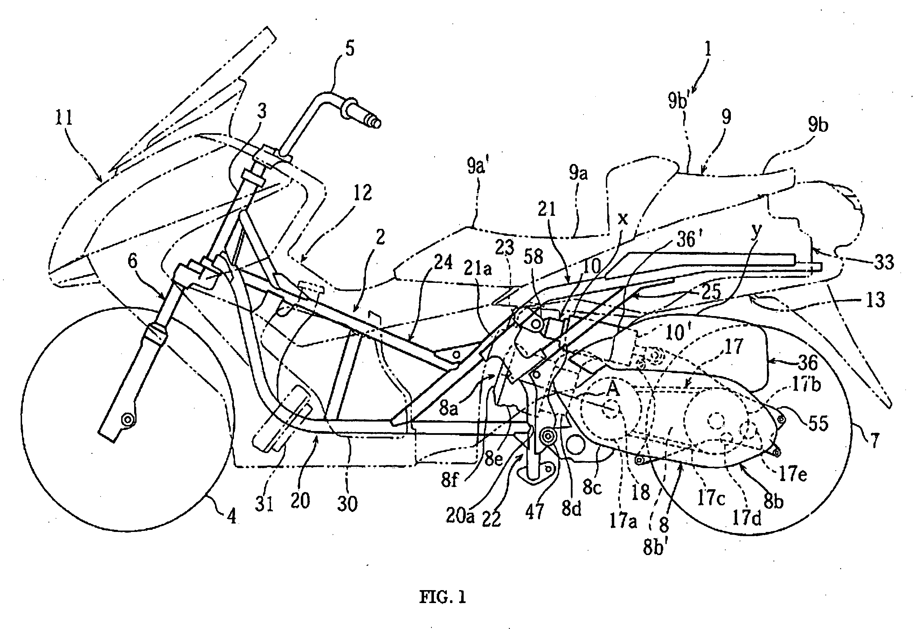

Furthermore, as shown in Fig. 1, a rear half 10' of the rear suspension 10 overlaps a front portion 36' of the air cleaner 36 as viewed from laterally of a vehicle, so that the front portion 36 ' and the rear half 10' form an overlapping portion. Also, a heightwise position of an upper edge x of the rear suspension 10 is substantially aligned with a heightwise position of an upper edge y of the air cleaner 36.

According to the embodiment, since the rear suspension 10 is arranged rightwardly in the vehicle width direction of the rear wheel 7 positioned on the body center line C and the air cleaner 36 is arranged leftwardly in the vehicle width direction and above the transmission case 8b of the engine unit 8 as viewed in plan view, it is possible to arrange the air cleaner 36 making effective use of an empty space disposed above the transmission case 8b of the engine unit 8 without an interference with the rear suspension 10. Thereby, the air cleaner 36 can be sized to extend over a substantially total length of the transmission case 8b of the engine unit 8, thus enabling an increase in air volume.

Also, since the air cleaner 36 is arranged and fixed just above the transmission case 8b and the rear suspension 10 is arranged on an opposite side of the rear wheel 7 to the transmission case 8b, it is possible to readily ensure or establish a space in which the rear suspension 10 is arranged, while permitting the volume of the air cleaner 36 to be increased, and hence to adopt the rear suspension 10 having a large diameter and being lengthy, which is desirable.

According to the disclosed embodiment, since the rear suspension 10 is arranged to be directed substantially horizontally in the longitudinal direction of a vehicle and the rear suspension 10 is arranged with the rear half thereof overlapping the front portion of the air cleaner 36 in the vehicle width direction, it is possible to arrange the rear suspension 10 along a straight line connecting between a pivotal portion of the engine unit 8 and the rear wheel shaft 17e, thus enabling converting a vertical load, which acts on the rear wheel 7, into a longitudinal load to efficiently absorb the same.

According to the present embodiment, since the rear suspension 10 is arranged so that the upper edge x thereof is substantially aligned with the heightwise position of the upper edge y of the air cleaner 36, it is possible to arrange the rear suspension 10 in a low position on the body frame 2, thus enabling lowering the seat 9 in heightwise position to improve a stepping quality.

Also according to the present embodiment, since the rear storage part 33c of the storage box 33 is provided between the tandem seat 9b, which is positioned in a higher location than that of the main seat 9a, and the rear suspension 10, an increase in volume of storage can be achieved making effective use of that space between the rear suspension 10 and the tandem seat 9b, which is generated by horizontally arranging the rear suspension 10, thus enabling accommodating a large article such as helmet.

Also, since the tandem seat 9b is positioned in a higher location than that of the main seat 9a, it is possible to ensure a stepping quality while enabling the rear storage part 33c to be made large in size.

### Description of Reference Numerals and Signs

- 1:: motorcycle
- 2:: body frame
- 7:: rear wheel
- 8:: unit swing type engine unit
- 8a:: engine body
- 8b:: transmission case
- 9:: seat
- 9a:: main seat
- 9b:: tandem seat
- 10:: rear suspension
- 33:: storage box (article storage portion)
- 36:: air cleaner
- x:: upper edge of rear suspension
- y:: upper edge of air cleaner

## Claims

1. A motorcycle (1) comprising:
a body frame (2);
an engine unit (8), a front portion of which is pivotally mounted on the body frame (2) and a rear portion of which supports a rear wheel (7);
an air cleaner (36) adapted to supply air to the engine unit (8), wherein the air cleaner (36) is arranged above the engine unit (8);
a suspension unit (10) disposed between the engine unit (8) and the body frame (2), wherein the suspension unit (10) is arranged on one side of the rear wheel (7) and the air cleaner (36) is arranged on an opposing side of the rear wheel (7); and
a seat (9) arranged above the suspension unit (10),
**characterized in that** an upper edge of the suspension unit (10) is substantially aligned in heightwise position with an upper edge of the air cleaner (36).

2. The motorcycle (1) according to claim 1, wherein the engine unit (8) comprises an engine body (8a) and a transmission case (8b) formed integral with the engine body (8a) to include a belt chamber, the rear wheel (7) is arranged at a rear end of the transmission case (8b), the air cleaner (36) is arranged on and fixed to an upper surface of the transmission case (8b).

3. The motorcycle (1) according to claim 1 or 2, wherein the suspension unit (10) is arranged substantially horizontally in a longitudinal direction of the motorcycle (1) to include an overlapping portion, which partially overlaps the air cleaner (36) as viewed from laterally of the motorcycle (1).

4. The motorcycle (1) according to claim 1, 2 or 3, wherein the seat (9) includes a main seat (9a) and a tandem seat (9b) arranged rearwardly of the main seat (9a) with an upper edge thereof positioned in a higher location than that of an upper edge of the main seat (9a), and an article storage part (33) is provided between the tandem seat (9b) and the suspension unit (10).

## Patentansprüche

1. Motorrad (1), das Folgendes umfasst:
einen Rahmen (2),
eine Motoreinheit (8), von der ein vorderer Abschnitt schwenkbar an dem Rahmen (2) angebracht ist und von der ein hinterer Abschnitt ein Hinterrad (7) trägt,
einen Luftfilter (36), der dafür eingerichtet ist, der Motoreinheit (8) Luft zuzuführen, wobei der Luftfilter (36) oberhalb der Motoreinheit (8) angeordnet ist,
eine Aufhängungseinheit (10), die zwischen der Motoreinheit (8) und dem Rahmen (2) angeordnet ist, wobei die Aufhängungseinheit (10) auf einer Seite des Hinterrades (7) angeordnet ist und der Luftfilter (36) auf einer entgegengesetzten Seite des Hinterrades (7) angeordnet ist, und
einen Sitz (9), der oberhalb der Aufhängungseinheit (10) angeordnet ist,
**dadurch gekennzeichnet, dass** eine Oberkante der Aufhängungseinheit (10) im Wesentlichen in der Höhenposition mit einer Oberkante des Luftfilters (36) ausgerichtet ist.

2. Motorrad (1) nach Anspruch 1, wobei die Motoreinheit (8) ein Motorgehäuse (8a) und ein integral mit dem Motorgehäuse (8a) geformtes Getriebegehäuse (8b) zum Einschließen einer Riemenkammer umfasst, wobei das Hinterrad (7) an einem hinteren Ende des Getriebegehäuses (8b) angeordnet ist, wobei der Luftfilter (36) an einer oberen Fläche des Getriebegehäuses (8b) angeordnet und an derselben befestigt ist.

3. Motorrad (1) nach Anspruch 1 oder 2, wobei die Aufhängungseinheit (10) im Wesentlichen horizontal in einer Längsrichtung des Motorrades (1) angeordnet ist, um einem überlappenden Abschnitt einzuschließen, der, gesehen seitlich von dem Motorrad (1), den Luftfilter (36) teilweise überlappt.

4. Motorrad (1) nach Anspruch 1, 2 oder 3, wobei der Sitz (9) einen Hauptsitz (9a) und einen hinter dem Hauptsitz (9a) angeordneten Tandemsitz (9b) einschließt, wobei eine Oberkante desselben in einer höheren Position angeordnet ist als diejenige einer Oberkante des Hauptsitzes (9a) und ein Artikelaufbewahrungsteil (33) zwischen dem Tandemsitz (9b) und der Aufhängungseinheit (10) bereitgestellt wird.

## Revendications

1. Motocycle (1), comprenant:
un châssis de carrosserie (2);
une unité de moteur (8), dont une partie avant est montée de manière pivotante sur le châssis de la carrosserie (2), une partie arrière supportant une roue arrière (7) ;
un filtre à air (36), adapté pour fournir de l'air à l'unité de moteur (8), le filtre à air (36) étant agencé au-dessus de l'unité de moteur (8) ;
une unité de suspension (10) agencée entre l'unité de moteur (8) et le châssis de la carrosserie (2), l'unité de suspension (10) étant agencée sur un côté de la roue arrière (7) et le filtre à air (36) étant agencé sur un côté opposé de la roue arrière (7) ; et
un siège (9) agencé au-dessus de l'unité de suspension (10) ;
**caractérisé en ce qu'**un bord supérieur de l'unité de suspension (10) est pratiquement aligné dans une position en hauteur avec un bord supérieur du filtre à air (36).

2. Motocycle (1) selon la revendication 1, dans lequel l'unité de moteur (8) comprend un corps de moteur (8a) et un carter de transmission (8b) formé d'une seule pièce avec le corps du moteur (8a), de sorte à englober une chambre à courroie, la roue arrière (7) étant agencée au niveau d'une extrémité arrière du carter de transmission (8b), le filtre à air (36) étant agencé sur une surface supérieure du carter de transmission (8b) et étant fixé sur celle-ci.

3. Motocycle (1) selon les revendications 1 ou 2, dans lequel l'unité de suspension (10) est agencée de manière pratiquement horizontale dans une direction longitudinale du motocycle (1), de sorte à englober une partie à chevauchement, chevauchant en partie le filtre à air (36), vue latéralement par rapport au motocycle (1).

4. Motocycle (1) selon les revendications 1, 2 ou 3, dans lequel le siège (9) englobe un siège principal (9a) et un siège tandem (9b) agencé vers l'arrière du siège principal (9a), un bord supérieur du siège tandem étant positionné dans un emplacement plus élevé que celui d'un bord supérieur du siège principal (9a), et une partie de stockage d'articles (33) étant agencée entre le siège tandem (9b) et l'unité de suspension (10).
